# EUROPÄISCHE PATENTSCHRIFT

(11) **EP 0 370 191 B1**
(45) Veröffentlichungstag und Bekanntmachung des Hinweises auf die Patenterteilung: **29.12.1993**
(21) Anmeldenummer: 89117085.4
(22) Anmeldetag: 15.09.1989
(51) Int. Cl.: G02B 13/00, G02B 23/24, A61B 1/00, G02B 3/00

(54) **Bikonvexe Stablinse**
Biconvex rodlens
Lentille biconvexe en forme de barreau

(30) Priorität: 22.11.1988 DE 3839364
(43) Veröffentlichungstag der Anmeldung: 30.05.1990
(73) Patentinhaber: Richard Wolf GmbH, 75438 Knittlingen (DE)
(72) Erfinder: Karst, Siegfried, D-7531 Eisingen (DE); Uhrich, Wilfried, D-7519 Oberderdingen-Flehingen (DE); Zickwolf, Rolf, D-7518 Bretten-Rinklingen (DE)
(74) Vertreter: Wilcken, Thomas, Dipl.-Ing.

(56) Entgegenhaltungen:
- DE-A- 3 113 110
- DE-A- 3 431 631
- GB-A- 2 178 555
- US-A- 4 148 551
- US-A- 4 168 882

## Beschreibung

Die Erfindung betrifft eine bikonvexe Stablinse für Optiken von medizinischen oder technischen Endoskopen, die ein der Aufnahme einer Optik dienendes Hüllrohrsystem aufweisen, bestehend aus einem Stab und einer an einem Stabende angekitteten Korrekturlinse, wobei am Stab mindestens ein Randzylinder vorgesehen ist, der im Vergleich zu benachbarten Teilen des Stabes einen größeren Durchmesser hat und mit dem sich die Stablinse im Einbauzustand innen an einem Innenrohr des Hüllrohrsystems der Optik abstützt.

Solche Linsen werden benötigt, um die Übertragungsleistung der Optiken von Endoskopen zu steigern. Die damit einhergehende Verlängerung der Linsen zu Stablinsen brachte es jedoch mit sich, daß die damit zusammengestellten Optiken sehr empfindlich gegen Verbiegen des Endoskopschaftes bzw. des sie aufnehmenden Innenrohres sind, da hierbei zwangsläufig auch die Stablinsen biegebeansprucht werden, was zum Bruch führen kann.

Dieses Problem ist bereits verschiedentlich angegangen worden. So ist aus der DE-OS 31 13 110 eine Stablinse bekannt, deren Durchmesser im Mittelteil kleiner gehalten ist als an den Enden. Derartig ausgebildete Stablinsen stützen sich lediglich mit ihren Endbereichen in dem Innenrohr ab, so daß eine bei der Handhabung unvermeidliche Biegeverformung desselben keine die Stablinsen bruchgefährdende Beanspruchung ergibt. Nachteilig ist jedoch bei diesem Konzept, daß die Kittstellen der Korrekturlinsen durch die auftretenden Biegeverformungen weiterhin in bruchgefährlicher Weise scherbeansprucht werden.

Die gleichen Nachteile haften einer Endoskopoptik an, die der DE-OS 34 31 631 entnehmbar ist. Diese Ausführung sieht zylindrisch geformte Stablinsen vor, die durch im Innenrohr oder auf der Stablinse angeordnete Distanzringe zentrierend abgestützt sind. Die Abstützung erfolgt dabei im Bereich der Linsenenden, d.h. an dem Ende der Stablinse, an welchem die Korrekturlinse aufgekittet ist, so daß auch in diesem Fall die Kittstellen beim Krümmen bzw. Verbiegen des Innenrohres oder Endoskopschaftes auf Scherung beansprucht wird.

Der Erfindung liegt daher die Aufgabe zugrunde, die bekannten Stablinsen derart zu verbessern, daß die durch unvermeidbare Biegebeanspruchung des Endoskopschaftes bzw. des Optikhüllrohres an der Stablinse auftretende Scherbeanspruchung im Bereich der Kittstelle zwischen der Stablinse und der Korrekturlinse vollständig vermieden wird.

Diese Aufgabe wird erfindungsgemäß dadurch gelöst, daß die Korrekturlinse und der Stab im Bereich der Kittstelle einen geringeren Durchmesser als der bzw. die Randzylinder haben.

Durch eine derartige Ausgestaltung der Stablinse wird erreicht, daß ihre radiale Abstützung und damit Zentrierung in einem zylindrischen Innenrohr lediglich durch Randzylinder des Stabes der Stablinse erfolgt, während die Korrekturlinse, der Bereich der Kittstelle und ein anschließender Teil des Stabes gegenüber der Innenwand des Innenrohres berührungsfrei angeordnet sind, wobei der so entstehende Ringraum zwischen dem Innenrohr und den vorerwähnten Staboptikteilen so bemessen ist, daß bei auftretende Biegeverformungen des Innenrohres dieses nicht die Korrekturlinse berühren wird. Somit kann die Kittstelle auch nicht auf Scherung beansprucht werden, da die Stablinse stets nur über den oder die Randzylinder mit dem Innenrohr in Berührung steht.

Eine insbesondere aus Gründen einer kostengünstigen Herstellbarkeit bevorzugte Ausbildung der Stablinsen kann dadurch gekennzeichnet sein, daß die Korrekturlinse und eine sich hieran anschließende Teillänge des Stabes gleichen Durchmesser aufweisen, während die übrige Teillänge des Stabes einen Randzylinder mit größerem Durchmesser bildet. Dabei ergibt sich der Kostenvorteil dadurch, daß die Korrekturlinse, die nach dem Ankitten ohnehin durch Schleifen im Durchmesser reduziert werden muß, dann gleichzeitig mit dem einen Teil des Stabes in einem Arbeitsgang abgeschliffen werden kann.

Nach weiteren Ausgestaltungen der Erfindung kann die Stablinse aber auch derart ausgebildet sein, daß der Stab einen Randzylinder hat, der an beiden Enden in Stabteile mit geringerem Durchmesser übergeht, von denen einer die angekittete Korrekturlinse trägt, oder daß mehrere Randzylinder vorgesehen sind, die jeweils an ihren beiden Enden in Stabteile mit geringerem Durchmesser übergehen.

Eine relativ kostengünstige Herstellung kann auch durch eine Ausführungsform erreicht werden, bei welcher der Stab mindestens eine plane Endfläche hat, an der eine plankonvexe Linse als Korrekturlinse angekittet ist. Die andere Endfläche des Stabes kann konvex ausgebildet oder ebenfalls plan geschliffen und mit einer plankonvexen Linse versehen sein. Schließlich ist es auch möglich, mindestens eine Endfläche des Stabes konvex auszubilden und dann an einem konvexen Stabende eine konkav-konvexe Korrekturlinse anzukitten.

Die Erfindung wird nachfolgend anhand der in der Zeichnung dargestellten Ausführungsbeispiele näher erläutert. Es zeigen:
- Figur 1: eine Gesamtansicht einer Endoskopoptik,
- Figur 2: einen Längsschnitt durch das Optikhüllrohr im Bereich des distalen Hüllrohrendes,
- Figur 3: eine Stablinse mit angekitteter Korrekturlinse vor der Endbearbeitung,
- Figur 4: die Stablinse nach Figur 3 nach der Reduzierung des Durchmessers der Korrekturlinse und des Stabbereiches an der Kittstelle,
- Figur 5: eine Ausführungsvariante der Stablinse mit an beiden Enden reduziertem Durchmesser,
- Figur 6: eine Ausführungsvariante mit an beiden Enden und im Mittelteil abgesetztem Durchmesser und
- Figur 7: eine Stablinse nach Figur 6, jedoch mit an beiden Enden des Stabes angekitteten Plankonvexlinsen.

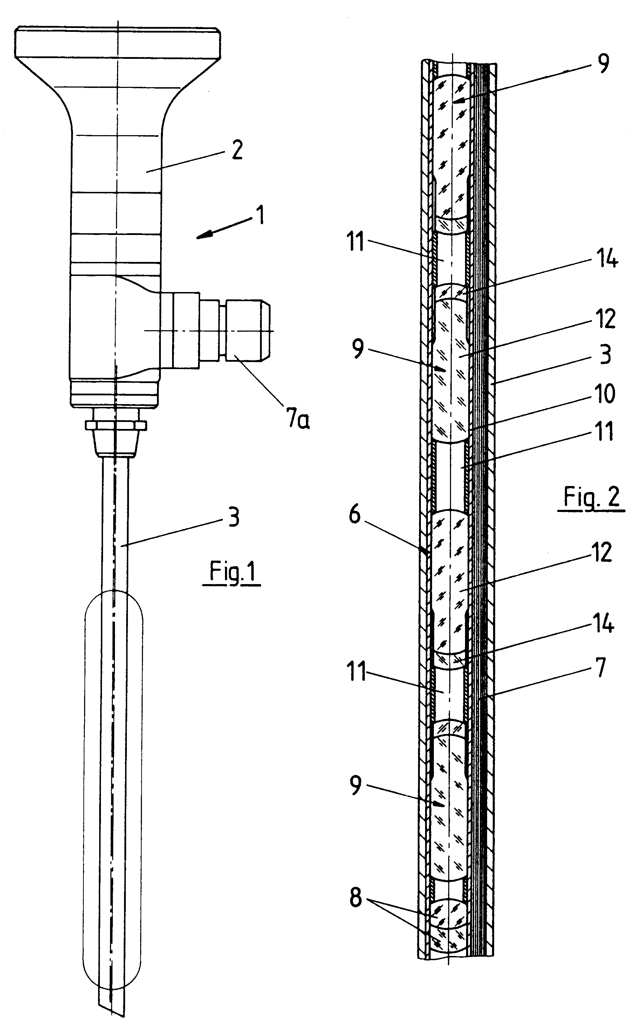

Die in Figur 1 dargestellte Endoskopoptik besteht im wesentlichen aus einem Lichtleitkabelanschluß 7a mit dem sich proximalseitig daran anschließenden Okulartrichter 2 und einem Hüllrohrsystem, das ein Außenrohr 3 und ein Innenrohr 10 umfaßt und das u.a. die später beschriebene Optik aufnimmt. Das Hüllrohrsystem ist entsprechend Figur 2 ausgebildet, wobei die beiden ineinandergreifenden Rohre 3, 10 vorzugsweise exzentrisch angeordnet sind und die Stablinsen 9 und das Objektiv 8 beinhalten, während die Lichtleiter 7 in dem zwischen dem Außenrohr 3 und dem Innenrohr 10 verbleibenden sichelförmigen Raum angeordnet sind und das am Anschlußstutzen 7a eingespeiste Licht zum distalen Endoskopende übertragen.

Die Endoskopoptik besteht aus einem in der Nähe des distalen Endes des Endoskopschaftes angeordneten, vereinfacht wiedergegebenen Objektiv 8, dem sich zum proximalen Ende hin in bekannter Weise eine Reihe von Stablinsen 9 anschließt. Das Objektiv 8 sowie auch die Stablinsen 9 sind in einem dünnwandigen Innenrohr 10 eingesetzt und werden mittels Blendröhrchen 11 auf gegenseitigem Abstand gehalten.

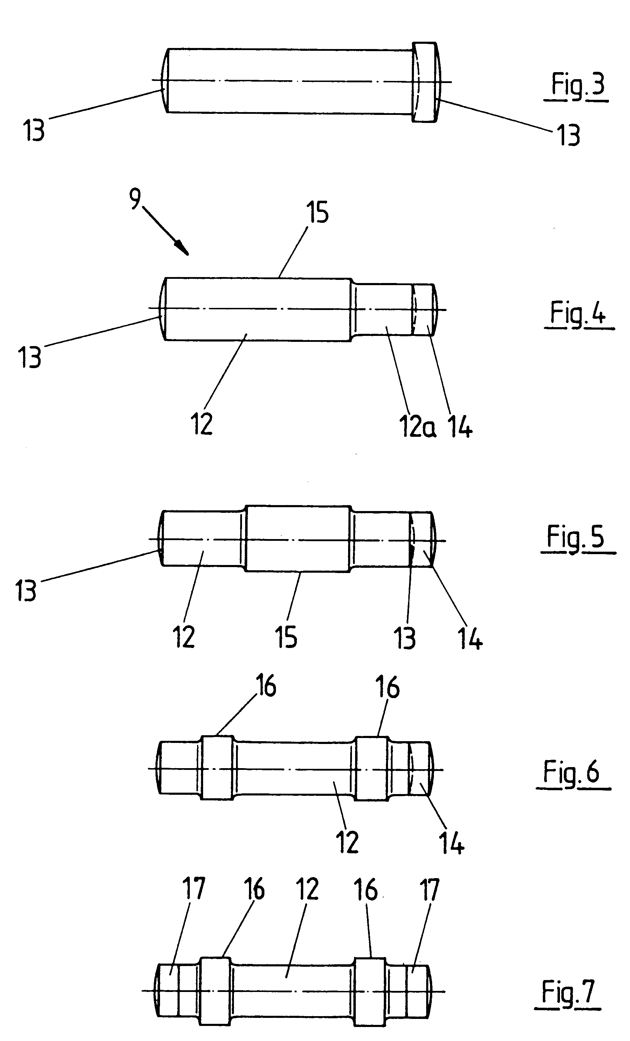

Jede Stablinse 9 besteht aus einem beispielsweise aus Kronglas gefertigten Stab 12, der nach den Figuren 3 bis 6 konvex geformte Endflächen 13 aufweist. An einer der Endflächen 13 ist jeweils eine konkav-konvexe Korrekturlinse 14 angeordnet, die mit dem Stab 12 durch Kitten verbunden ist und beispielsweise aus Flintglas hergestellt ist. Die Korrekturlinse 14 hat die Aufgabe, Bildfehler zu korrigieren, die im Zusammenhang stehen mit der sphärischen und chromatischen Längsabweichung und mit dem Astigmatismus.

Nach dem Ankitten der noch nicht am Umfang beschliffenen Korrekturlinse 14 gemäß Figur 3 wird der Durchmesser dieser Linse und ein sich an sie anschließender Stabteil 12a durch Schleifen im Durchmesser reduziert, so daß etwa zwei Drittel der Gesamtlänge der Stablinse 9 als Randzylinder 15 mit dem ursprünglichen Durchmesser erhalten bleiben und eine Ausführungsform entsprechend Figur 4 entsteht. Die Differenz zwischen dem Durchmesser des Randzylinders 15 und dem der abgesetzten Teillänge des Stabes 12 liegt vorzugsweise im Bereich von 0,02 bis 0,15 mm.

Wie die Figur 5 zeigt, kann eine entsprechende Durchmesserreduzierung außerdem im Bereich des anderen Stabendes vorgesehen sein, so daß beispielsweise die Länge des verbleibenden Randzylinders 15 noch etwa ein Drittel der Gesamtlänge der Stablinse beträgt. Der Erfindungszweck wird auch durch eine Stablinse erfüllt, die gemäß Figur 6 im Mittelbereich sowie im Bereich ihrer Enden im Durchmesser abgesetzt ist, so daß die Zentrierung der Stablinse im Innenrohr über zwei Randzylinder 16 erfolgt. Sowohl bei dieser Ausführung als auch bei den vorbeschriebenen Ausführungsbeispielen gemäß den Figuren 3 bis 5 könnte der Stab 12 allerdings auch mit planparallelen Endflächen und mit an diesen angekitteten Plankonvexlinsen 17 gemäß Figur 7 versehen sein, von denen eine als Korrekturlinse dient. Wie auch schon vorher erwähnt wurde, besteht schließlich auch die Möglichkeit, den Stab an einem Ende konvex und am anderen Ende plan zu schleifen, wobei an die plane Endfläche eine plankonvexe Linse und an deren konvexe Fläche eine Korrekturlinse angekittet ist.

Die in den Figuren dargestellten Stäbe 12 mit den jeweiligen Randzylindern und im Verhältnis hierzu im Durchmesser reduzierten Bereichen sind einstückige optische Bauelemente. In der Form und Abmessung hiermit identische und ähnliche Stäbe lassen sich allerdings auch so herstellen, daß auf einen zylindrischen Glasstab ein Rohr aufgeschoben wird oder mehrere Rohre aufgeschoben werden, die mit dem Glasstab beispielsweise durch Kitten oder Kleben verbunden werden und die hinsichtlich Länge und Außendurchmesser den dargestellten Randzylindern entsprechen und diese somit bilden. Die Rohre können ebenfalls aus Glas oder aber auch aus Metall, Kunststoff und dergleichen bestehen, wobei diese dann einen zylindrischen oder einen in Art eines Faltenbalges ausgebildeten Körper aufweisen können.

## Patentansprüche

1. Bikonvexe Stablinse (9) für Optiken von medizinischen oder technischen Endoskopen, die ein der Aufnahme einer Optik dienendes Hüllrohrsystem aufweisen, bestehend aus einem Stab (12) und einer an einem Stabende angekitteten Korrekturlinse (14), wobei am Stab mindestens ein Randzylinder (15; 16) vorgesehen ist, der im Vergleich zu benachbarten Teilen des Stabes (12)einen größeren Durchmesser hat und mit dem sich die Stablinse (9) im Einbauzustand innen an einem Innenrohr des Hüllrohrsystems der Optik abstützt, dadurch gekennzeichnet, daß die Korrekturlinse (14) und der Stab (12) im Bereich der Kittstelle einen geringeren Durchmesser als der bzw. die Randzylinder (15 ; 16) haben.

2. Stablinse nach Anspruch 1, dadurch gekennzeichnet, daß die Korrekturlinse (14) und eine sich hieran anschließende Teillänge des Stabes (12) gleiche Durchmesser aufweisen, während die übrige Teillänge des Stabes (12) einen Randzylinder (15) mit größerem Durchmesser bildet.

3. Stablinse nach Anspruch 1, dadurch gekennzeichnet, daß der Stab einen Randzylinder (15) hat, der an beiden Enden in Stabteile mit geringerem Durchmesser übergeht, von denen einer die angekittete Korrekturlinse (14) trägt.

4. Stablinse nach Anspruch 1, dadurch gekennzeichnet, daß mindestens zwei Randzylinder (16) vorgesehen sind, die an ihren Enden in Stabteile mit geringerem Durchmesser übergehen.

5. Stablinse nach Anspruch 1 und einem der Ansprüche 3 und 4, dadurch gekennzeichnet, daß der Stab (12) mindestens eine plane Endfläche hat, an der eine plankonvexe Linse (14, 17) angekittet ist.

6. Stablinse nach einem der Ansprüche 1 bis 4, dadurch gekennzeichnet, daß der Stab (12) mindestens eine konvexe Endfläche hat, an der eine konkav-konvexe Korrekturlinse (14) angekittet ist.

## Claims

1. A biconvex bar lens (9) for optical systems of medical or technical endoscopes, which have a casing tube system serving to receive an optical system, consisting of a bar (12) and of a correction lens (14) cemented on one bar end, in which at least one marginal cylinder (15,16) is provided on the bar, which cylinder has a larger diameter compared with adjacent parts of the bar (12) and with which the bar lens (9) rests in installed state inside on an inner tube of the casing tube system of the optical system, characterised in that the correction lens (14) and the bar (12) have a smaller diameter than the marginal cylinder or cylinders (15; 16) in the region of the cement site.

2. A bar lens according to Claim 1, characterised in that the correction lens (14) and a partial length of the bar (12), adjoining thereto, have the same diameters, whereas the remaining partial length of the bar (12) forms a marginal cylinder (15) with a larger diameter.

3. A bar lens according to Claim 1, characterised in that the bar has a marginal cylinder (15), which at both ends continues into bar parts with a smaller diameter, one of which carries the cemented on correction lens (14).

4. A bar lens according to Claim 1, characterised in that at least two marginal cylinders (16) are provided, which continue at their ends into bar parts with a smaller diameter.

5. A bar lens according to Claim 1 and one of Claims 3 and 4, characterised in that the bar (12) has at least one flat end face, on which a planoconvex lens (14, 17) is cemented.

6. A bar lens according to one of Claims 1 to 4, characterised in that the bar (12) has at least one convex end face, on which a concave-convex correction lens (14) is cemented.

## Revendications

1. Lentille biconvexe (9) en forme de barreau destinée à des optiques d'endoscopes médicaux ou techniques, qui comportent un système de fourreau tubulaire destiné à recevoir une optique, la lentille étant composée d'un barreau (12) et d'une lentille de correction (14) cimentée à une extrémité du barreau, sur lequel est prévu au moins un cylindre de bordure (15; 16), qui a un diamètre supérieur en comparaison aux parties voisines du barreau (12), et par l'intermédiaire duquel la lentille (9) en forme barreau s'appuie à un tube intérieur du système de fourreau tubulaire de l'optique, caractérisée en ce que la lentille de correction (14) et le barreau (12) ont, dans la zone de l'emplacement cimenté, un diamètre plus faible que le ou les cylindres de bordure (15; 16).

2. Lentille en forme de barreau selon la revendication 1, caractérisée en ce que la lentille de correction (14) et une longueur partielle s'y raccordant du barreau (12) présentent des diamètres identiques, tandis que la longueur partielle restante du barreau (12) forme un cylindre de bord (15) de diamètre plus grand.

3. Lentille en forme de barreau selon la revendication 1, caractérisée en ce que le barreau a un cylindre de bord (15), qui aux deux extrémités se transforme en des parties de barreau de diamètre plus faible, dont l'une porte la lentille de correction (14) cimentée.

4. Lentille en forme de barreau selon la revendication 1, caractérisée en ce que sont prévus au moins deux cylindres de bord (16), qui se transforment à leurs extrémités en des parties de barreau de diamètre plus faible.

5. Lentille en forme de barreau selon la revendication 1 et l'une des revendications 3 et 4, caractérisée en ce que le barreau (12) a au moins une surface d'extrémité plane, à laquelle est cimentée une lentille plane-convexe (14, 17).

6. Lentille en forme de barreau selon l'une des revendications 1 à 4, caractérisée en ce que le barreau (12) a au moins une surface d'extrémité convexe, à laquelle est cimentée une lentille de correction (14) concave-convexe.
